# EUROPEAN PATENT SPECIFICATION

(11) **EP 2 908 666 B1**
(45) Date of publication and mention of the grant of the patent: **13.12.2017**
(21) Application number: 12813995.3
(22) Date of filing: 18.10.2012
(51) Int. Cl.: A23L 3/375, A21D 15/02

(54) **PROCESS FOR PRODUCING OVEN-TYPE CONFECTIONERY PRODUCTS WITHOUT ADDITIVES, FROZEN/LOWERED IN TEMPERATURE, WITH QUICK RECOVERY BEFORE EATING THEM**
VERFAHREN ZUR HERSTELLUNG VON GEFRORENEN/BEI NIEDRIGER TEMPERATUR HERGESTELLTEN GEBACKENEN SÜSSWAREN OHNE ZUSATZSTOFFE MIT SCHNELLER WIEDERHERSTELLUNG VOR DEM ESSEN
PROCÉDÉ DE PRODUCTION DE PRODUITS DE CONFISERIE DU TYPE CUITS AU FOUR, SANS ADDITIFS, CONGELÉS/REFROIDIS, À RÉCUPÉRATION RAPIDE AVANT DE LES CONSOMMER

(43) Date of publication of application: 26.08.2015
(73) Proprietor: Dolciaria Orsobianco S.r.l., 12011 Borgo San Dalmazzo (CN) (IT)
(72) Inventor: BONELLI, Luca, 12011 Borgo San Dalmazzo (CN) (IT)
(74) Representative: Garavelli, Paolo
(86) International application number: PCT/IT2012/000319
(87) International publication number: WO 2014/061042

(56) References cited:
- WO-A1-93/20700
- US-A- 3 821 441
- US-A- 4 366 178
- US-A- 5 472 724
- IWANSKA S ET AL: "Application of cryogenic temperatures in storage of prepared confectionery. II. Effect of pastry freezing in liquid nitrogen or in air-blast tunnel on contents of protein and fat and on lipid rancidity changes", ZESZYTY NAUKOWE AKADEMII ROLNICZO-TECHNICZNEJ W OLSZTYNIE, OLSZTYN : WYDAWN. ART OLSZT, vol. 178, no. Special Issue, 1 January 1977 (1977-01-01), pages 175-186, XP009170194, ISSN: 0324-9182
- FRITCH C F: "FREEZING BAKERY PRODUCTS WITH LIQUID NITROGEN", BAKER'S DIGEST, SIEBEL PUBLISHING CO. PONTIAC, ILLINOIS, US, vol. 45, no. 5, 1 October 1971 (1971-10-01), page 61/62,75, XP001024794, ISSN: 0191-6114
- LABUDE W: "Deep-freezing of bakery products using liquid nitrogen", 1 September 1969 (1969-09-01), TAGUNG FUER BAECKEREI-TECHNOLOGIE,, PAGE(S) 183 - 189, XP009170191, the whole document
- TOMLINS R: "Cryogenic freezing and chilling of food", FOOD TECHNOLOGY INTERNATIONAL. EUROPE, STERLING PUBLICATIONS, LONDON, GB, 1 January 1995 (1995-01-01), pages 148-149, XP009170197, ISSN: 0950-4435
- "Quick freezing preservation of bakery products ED - Pruthi J S", 1 January 1999 (1999-01-01), QUICK FREEZING PRESERVATION OF FOODS: FOODS OF PLANT ORIGIN, VOLUME 2, ALLIED PUBLISHERS LIMITED, IN, PAGE(S) 146 - 166, XP009170201, ISBN: 81-7023-963-X pages 146-166, the whole document

## Description

The present invention refers to a process for producing oven-type confectionery products without additives, frozen/lowered in temperature, with quick recovery before eating them.

In order to allow a wider and longer consumption, prolonged in time, the most common oven products (bread, pasta, confectionery), as well as the foodstuff products more in general, have been commonly frozen, in order to be then heated and eaten after a long time with respect to their production.

Freezing, down to a temperature of about -18°C, of oven products is a process that, upon their heating (cooking completion) before their final consumption, implies very long times (on the order of 30 minutes) to obtain a product that can be eaten. Such long times are incompatible with uses of such products that provide for their immediate consumption by users: for example, a cake that must be eaten at breakfast, for which a user must wait for all this time before its consumption, if the stocks of such case gets exhausted.

In order to solve this type of problem, processes (for example like the one disclosed in document US 4,986,992) have been used wherein a partially cooked (around 80%) confectionery product is subjected to immediate freezing by using liquid nitrogen, taking it at a starting temperature of about -4 °C and then at the freezing temperature of -18 °C, in a time equal to about 10 - 11 minutes. In order to allow such working, these confectionery products however provided for the use of additives, which is not optimum for the end product quality. The most relevant prior art is given by the following documents:
- US-A-3 821 441;
- US-A-5 472 724;
- WO-A1-93/20700;
- US-A-4 366 178; and
- Wanska S. et al.: "Application of cryogenic temperatures in storage of prepared confectionery. II. Effect of pastry freezing in liquid nitrogen or in air-blast tunnel on contents of protein and fat and on lipid rancidity changes", Zeszty Naukowe Akademi Rolniczo-Technicznej W Olsztynie, Olsztyn: Wydawn, Art Olszt, vol. 178, no. Special Issue, 1 January 1977 (1977-01-01), pages 175-186, XP009170194, ISSN: 0324-9182.

Object of the present invention is providing a process for producing brioches or croissants frozen/lowered in temperature, that is simple to make, and that allows obtaining confectionery products that keep their internal structure free from additives and that can be recovered very quickly, obtaining again an end product with the same organoleptic characteristics of the one originally went out of a production oven. The above and other objects and advantages of the invention, as will result from the following description, are obtained with a process as claimed in claim 1.

According to the invention, a process is provided for producing oven-type confectionery products without additives, frozen/lowered in temperature, with quick recovery before eating them, wherein such process comprises the steps of:
- completely cooking the confectionery product, for example in an oven; at a temperature of 200°C
- immediately freezing/lowering in temperature the cooked confectionery product by using liquid nitrogen, such as defined in present claim 1 for example using a liquid nitrogen temperature lowering device;
- packaging the confectionery product frozen/lowered in temperature, for example in common sealed boxes containing a plurality of products of this type; and
- possibly storing in a warehouse, and/or possibley transporting the packaged confectionery product to an end user.

Moreover, such process comprises, before eating the product, the step of subjecting the confectionery product frozen/lowered in temperature to recovery in heating means (for example an oven) at about 200 °C for a period ranging from 3 to 7 minutes.

Alternatively, a step can be provided for taking to ambient temperature the confectionery product frozen/lowered in temperature through staying at ambient temperature for a period of about 1 hour without requiring the use of an oven or other similar hearing means. The step of immediately freezing/lowering in temperature through liquid nitrogen occurs by taking the cooked confectionery product to a temperature from -20 °C to -90 °C and keeping the confectionery product at such temperature for a minimum period of 2 minutes.

Moreover, the step of completely recovering the confectionery product occurs in a range of temperatures from 170 °C to 240 °C.

The currently more efficient application for producing brioches or croissants is the one in which the step of immediately freezing/lowering in temperature through liquid nitrogen occurs by taking the confectionery product, cooked at a temperature of 200 °C, down to a temperature of -60 °C in about 8 minutes and keeping the confectionery product at the temperature of -60 °C for a period of 4 minutes.

With the above described process, it is possible to make confectionery products subjected to lower stresses during preparation and cooking, taking them back, in about 5 minutes of recovery after freezing/lowering in temperature, to their eatable status like the just cooked one, with high saving of times and costs for the end user.

The produced confectionery products are free from conservants and are composted of selected raw materials, that guarantee their final freshness before their consumption. For example, for a product like a brioche, the ingredients used for its preparation are: wheat, butter, sugar, fresh pastorised whole milk, fresh pastorised eggs, absence of monodiglicerydes of fat acids, absence of colorants, conservants and genetically manipulated organisms, glucose syrup, vanilline as single used aroma, and margarine without hydrogenated fats.

The products made with the inventive process can be stored in a range of temperatures from -5 °C to -20 °C and are recovered at about 200 °C fora period from 3 to 7 minutes.

### EXAMPLES

The present invention will be further described by using some application embodiments, provided as. a non-limiting example, in order to allow a skilled person in the art to understand the evolution of the inventive process and of the product derived therefrom.

Two tests have been carried out, a cooking test and a test of lowering in temperature for cooked croissants. The test results are included in the two Tables that follow.

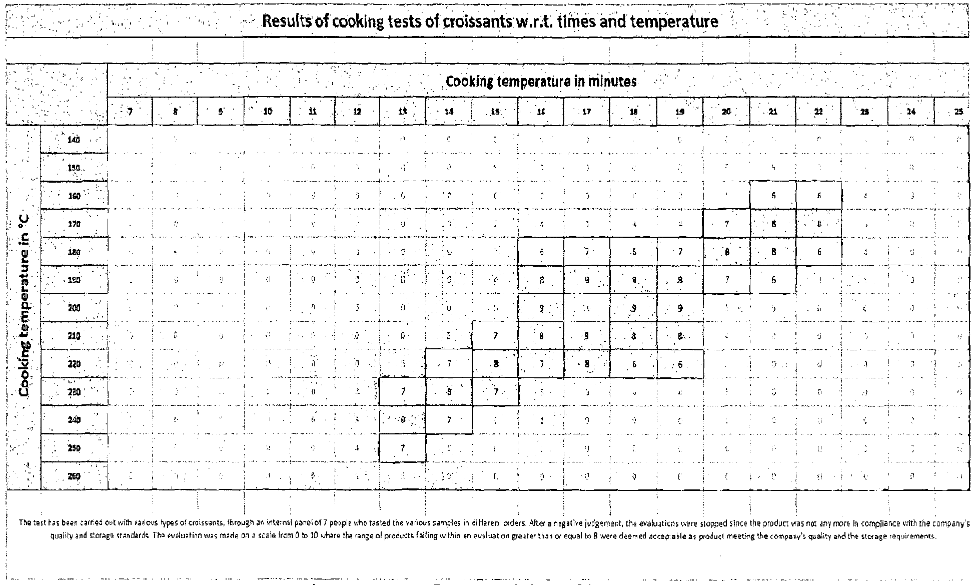

As can be seen from this first table, the satisfactory results are those pointed out in the light-coloured boxes.

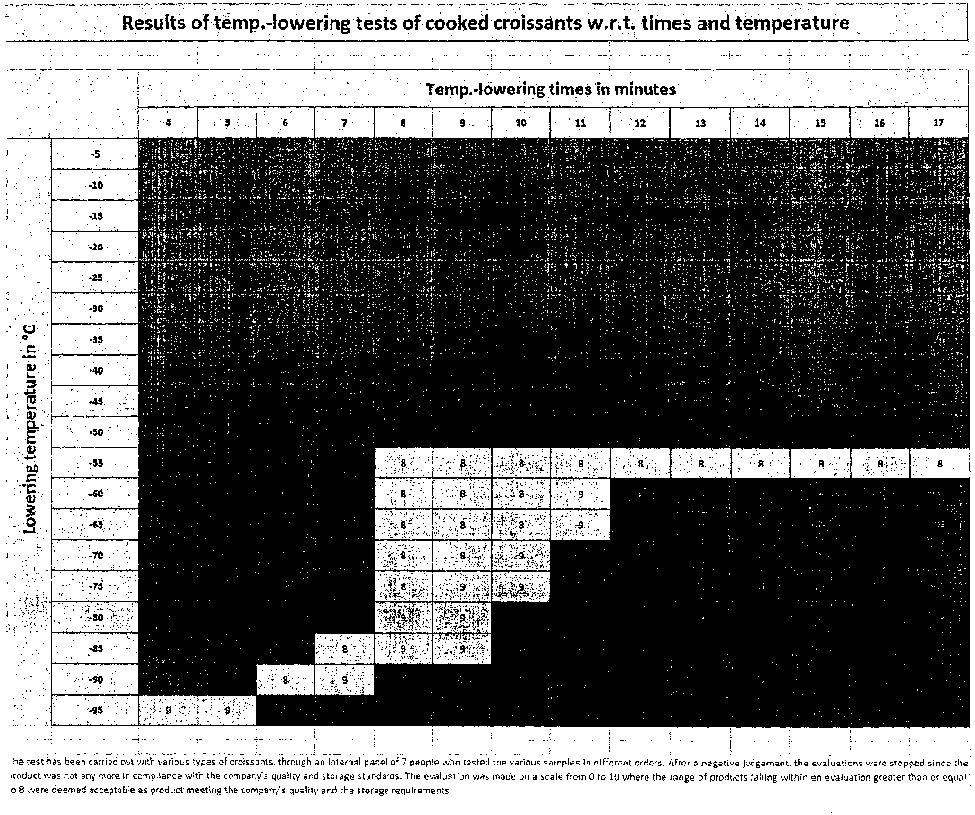

As can be seen from this second table, the satisfactory results are those pointed out in the light-coloured boxes, or those in the lower right part of the table.

## Claims

1. Process for producing brioches or croissants, said brioches or croissants being prepared without additives and being frozen/lowered in temperature, the temperature of said brioches or croissants being recovered to a cooking temperature before eating them, said process comprising the steps of:
- completely cooking in an oven the brioches or croissants;
- immediately freezing/lowering in temperature the cooked brioches or croissants by using liquid nitrogen, the step of immediately freezing/lowering in temperature through liquid nitrogen occurring by taking the brioches or croissants, cooked at a temperature of 200 °C, down to a temperature of -60 °C in 8 minutes and keeping the brioches or croissants at the temperature of -60 °C for a period of 4 minutes;
- packaging the brioches or croissants frozen/lowered in temperature;
- storing at a temperature from -5 °C to -20 °C and transporting the packaged brioches or croissants; and
- subjecting to recovery the brioches or croissants in heating means at 200 °C for a period ranging from 3 to 7 minutes, or, alternatively, taking back to ambient temperature the brioches or croissants through staying at ambient temperature for a period of 1 hour.

## Patentansprüche

1. Vorgehensweise für die Herstellung von Brioche oder Hörnchen, wobei diese Brioche oder Hörnchen keine Zusatzstoffe enthalten, sondern tiefgefroren /schockgefrostet sind und die Temperatur der besagten Brioche oder Hörnchen vor Verbrauch auf eine Gartemperatur gebracht wird. Dieser Vorgang umfasst folgende Phasen:
- kompletter Backvorgang der Brioche oder Hörnchen im Ofen,
- sofortiges Einfrieren/Schockfrosten der gebackenen Brioche oder Hörnchen durch Verwendung von flüssigem Stickstoff, wobei in der sofort erfolgenden Einfrier/Schockfrostphase die Temperatur der bei einer Temperatur von 200°C gebackenen Brioche oder Hörnchen durch den flüssigen Stickstoff in ungefähr 8 Minuten bis auf eine Temperatur von -60 °C abfällt und die Brioche oder Hörnchen für eine Zeit von 4 Minuten der Temperatur von -60 °C ausgesetzt bleiben;
- Verpackung der tiefgefrorenen/schockgefrosteten Brioche oder Hörnchen;
- Lagerung bei einer Temperatur von -5°C bis -20°C und Transport der verpackten Brioche oder Hörnchen; und
- Aufbacken der Brioche oder Hörnchen durch Erhitzung auf 200°C für eine Zeit von 3 bis 7 Minuten oder alternativ durch Auftauen der Brioche oder Hörnchen bei Raumtemperatur für eine Zeit von 1 Stunde.

## Revendications

1. Procédure pour la production de brioches ou de croissants qui sont préparés sans adjuvants puis sont soumis à la surgélation et à l'abaissement de température ; avant la consommation, les brioches ou les croissants seront ramenés à la température de cuisson, cette procédure comprend les phases de :
- cuisson complète dans un four des brioches ou des croissants ;
- surgélation immédiate et abaissement de la température à l'aide de l'azote liquide des brioches ou des croissants cuits ; la phase de surgélation immédiate et d'abaissement de la température par l'azote liquide a lieu en portant les brioches ou les croissants cuits à une température de 200°C jusqu'à une température de -60°C en environ 8 minutes ; les brioches ou les croissants sont maintenus à la température de -60°C pendant 4 minutes ;
- conditionnement des brioches ou des croissants après surgélation et à abaissement de température ;
- stockage à une température comprise entre -5°C et -20°C puis transport des brioches ou des croissants emballés ; et
- rétablir la température des brioches ou des croissants à l'aide de moyens chauffants jusqu'à 200°C pendant un temps variable de 3 à 7 minutes, ou bien rétablir la température ambiante en laissant les brioches ou les croissants à température ambiante pendant 1 heure.
